# EUROPEAN PATENT SPECIFICATION

(11) **EP 4 063 622 B1**
(45) Date of publication and mention of the grant of the patent: **26.02.2025**
(21) Application number: 22315066.5
(22) Date of filing: 17.03.2022
(51) Int. Cl.: F01M 1/10, F16N 39/06, B01D 29/56, B01D 35/147

(54) **FILTER DEVICE**
FILTERVORRICHTUNG
DISPOSITIF DE FILTRE

(30) Priority: 25.03.2021 EP 21165053; 26.04.2021 EP 21170553; 27.10.2021 EP 21205089
(43) Date of publication of application: 28.09.2022
(73) Proprietor: Illinois Tool Works, Inc., Glenview, Illinois 60025 (US)
(72) Inventor: Chantome, Isabelle, Glenview, 60025 (US); Martineau, Sylvain, Glenview, 60025 (US); Piot, Etienne, Glenview, 60025 (US); Lefebvre, Guillaume, Glenview, 60025 (US)
(74) Representative: HGF

(56) References cited:
- EP-A1- 2 143 934
- EP-A1- 2 586 511
- DE-A1- 102005 004 287
- DE-A1- 102007 023 641
- DE-A1- 102014 009 707

## Description

### TECHNICAL FIELD

The present invention relates to a filter device and particularly, but not exclusively, to a filter device for filtering a liquid such as oil in a vehicle engine which provides a reduced pressure drop across a filtration medium at low temperatures.

### BACKGROUND

Typically, a filter device for filtering engine oil provides continuous cleaning to the engine oil. The filter device removes particulates such as carbon, soot and metals for example. Filters often comprise at least one highly efficient filtration medium which allows for removal of very fine particulates within the engine oil by passing the oil through the filtration medium. For modern vehicles there is an increasing need to remove smaller particles from the oil by increasing the efficiency of the filtration medium.

When an engine is running at standard or high temperatures, the viscosity of the oil is of a low enough level that the pressure drop across the filtration medium remains within acceptable limits. However, engine oil has increased viscosity at lower temperatures, for example when starting an engine from cold. This high viscosity means a large force is required to push the liquid through the filtration medium and particularly highly efficient filtration medium, resulting in a high pressure drop across the filtration medium. The oil pump must therefore increase the force it exerts to drive the oil through the filtration medium at colder temperatures. If the pressure drop across the filtration medium is too high, the flow of oil through the engine may be impeded risking engine damage. Damage may also be caused to the filtration medium.

It is known to provide a filtration medium with holes dispersed throughout the body of the filtration medium, as described on patent applications DE102007023641 or EP2586511. However, this has the drawback that the edge of the hole in the filtration medium can be rough which can allow for parts of the filtration medium to dislodge and contaminate the oil, further risking engine damage.

It is an aim of certain examples of the present invention to solve, mitigate or obviate, at least partly, at least one of the problems and/or disadvantages associated with the prior art

### BRIEF SUMMARY OF THE INVENTION

The present invention provides a filter device as claimed in the appended claims.

According to an aspect, there is provided a filter device comprising: a housing; a first filtration medium within the housing such that for a liquid passing through the housing at least a portion is filtered by the first filtration medium; and a bypass for allowing a portion of the liquid to bypass the first filtration medium.

The filter device may comprise a frame supporting at least a portion of a periphery of the first filtration medium. The frame may comprise at least one aperture extending therethrough, e.g. such that a portion of the liquid can pass through the at least one aperture and bypass the first filtration medium.

According to another aspect of the invention, there is provided a filter device comprising: a housing; a first filtration medium within the housing such that for a liquid passing through the housing at least a portion is filtered by the first filtration medium; and a frame supporting at least a portion of a periphery of the first filtration medium; wherein the frame comprises at least one aperture extending therethrough, such that a portion of the liquid can pass through the at least one aperture and bypass the first filtration medium.

The filter device may further comprise a second filtration medium within the housing, such that at least the portion of the liquid which bypasses the first filtration medium passes through the second filtration medium.

Preferentially, the first filtration medium has a first filtration efficiency and the second filtration medium has a second filtration efficiency, which may be lower than the first filtration efficiency.

The housing may comprise a liquid inlet on a first side of the first filtration medium and a liquid outlet on a second side of the first filtration medium and the second filtration medium may be positioned between the inlet or outlet and the first filtration medium.

The second filtration medium may be positioned across or within the at least one aperture.

The frame may comprise at least a first frame portion and a second frame portion coupled together, and the aperture may be a pathway between the first frame portion and the second frame portion.

The aperture may comprise a sinuous pathway.

The frame may comprise a plurality of apertures.

The frame may comprise a liquid impermeable material.

The frame may be integral to or forms part of the housing.

The housing may comprise first and second housing portions which when coupled together form the frame and the aperture therethrough.

The first filtration medium may comprise at least one aperture extending therethrough, e.g. such that a portion of the liquid can pass through the at least one aperture and bypass the first filtration medium.

According to another aspect, there is provided a filter device comprising: a housing, a first filtration medium within the housing such that for a liquid passing through the housing at least a portion is filtered by the first filtration medium; and wherein the first filtration medium comprises at least one aperture extending therethrough, such that a portion of the liquid can pass through the at least one aperture and bypass the first filtration medium. According to an implementation of the invention, such a filter device may not comprise any frame around the first filtration medium.

At least one aperture may be formed by or obtained thanks to ultrasonic wave cutting or formed by or thanks to cold stamping. Therefore, a clean cut can be obtained.

The filter device may further comprise: a second filtration medium within the housing and at least a spacer between the first filtration medium and the second filtration medium. According to an implementation of the invention, such a filter device may not comprise any frame around the second filtration medium. According to an implementation of the invention, such the spacer may be a plastic insert between the first filtration medium and the second filtration medium.

The spacer may be molded for instance by plastic molding.

The first filtration medium and the second filtration medium may be joined or connected at their peripheries. The spacer may maintain a space (or a gap) between the first filtration medium and the second filtration medium. The joined or connected filtration medium may therefore form a bag.

The first and second filtration mediums may be joined or connected at their periphery by welding (eg by ultrasonic welding).

The filter device may further comprise a second filtration medium, which may be a low efficiency filtration medium. Preferentially said second filtration medium is protecting the first filtration medium.

The filter may further comprise: a third filtration medium within the housing comprising a frame and at least one filtration medium attached to the frame.

Preferentially, the frame further comprises at least one lug, said at least one lug at least partially obturating said at least one aperture.

The frame may be made of plastic and/or may be overmolded.

### BRIEF DESCRIPTION OF THE DRAWINGS

Examples of the invention are further described hereinafter with reference to the accompanying drawings, in which:
Figure 1 illustrates a plan view of an example of a filter device;
Figure 2 illustrates a front view of an example frame and filtration medium;
Figure 3 illustrates a front view of a further example frame and filtration medium;
Figure 4 illustrates a plan view showing a further example of a filter device;
Figure 5a illustrates a plan view of the liquid flow through an example of a filter device;
Figure 5b illustrates an enlarged view of an aperture of the filter device of Figure 5a;
Figure 5c illustrates a front view of the filter device of Figure 5a;
Figure 6a illustrates a graph of the pressure drop across a filter with a bypass compared to without a bypass at a liquid temperature of 70°C;
Figure 6b illustrates a graph of the pressure drop across a filter with a bypass compared to without a bypass at a liquid temperature of 0°C; and
Figure 6c illustrates a graph of the percentage of the flow filtered with a bypass at varying temperatures;
Figure 7 illustrates a plan view of another example of a filter device according to the present invention;
Figure 8 illustrates a plan view of a further example of a filter device according to the present invention;
Figure 9 illustrates a perspective view of a third filtration medium according to the present invention for the filter device of figure 8;
Throughout the detailed description like numerals refer to like parts.

### DETAILED DESCRIPTION

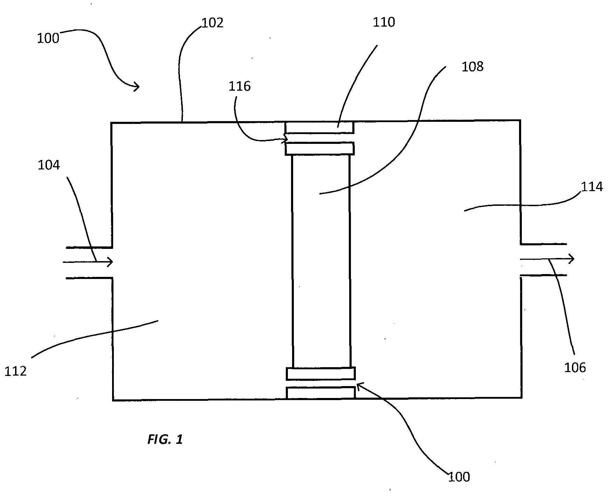

Figure 1 illustrates a plan view of example of a filter device 100. The filter device 100 includes a housing 102 for containing a liquid. The liquid may be engine oil for example. The housing 102 may have an inlet 104 and an outlet 106. In some cases, the housing 102 may have multiple inlets 104 and/or outlets 106. The inlet 104 allows liquid entry into the housing 102 and the outlet allows liquid to exit the housing 106, this may be valve controlled or passive, for example. In some examples the liquid may be driven into and out of the housing 102 by a pump apparatus (not shown).

The housing 102 is partitioned by a filtration medium 108. That is the filtration medium 108 divides the housing 102 such that liquid is directed therethrough for filtering. The filtration medium 108 is configured to remove particulates from the liquid when the liquid passes therethrough. For example, the filtration medium 108 may partition the housing 102 such that the filtration medium is between the inlet 104 and the outlet 106. In this way a liquid enters the housing 102 via the inlet 104 and must pass through the filtration medium 108 to exit the housing via the outlet 106.

Examples of suitable filtration media include but are not limited to a glass fibre or plastic fibre impregnated with resin. Suitably, this may be provided as a woven or non-woven fabric. The filtration medium 108 may be a single sheet of material or a plurality of stacked sheets for example. Moreover, in some examples the filtration medium 108 may be gathered or bunched etc to create a stacked arrangement of the filtration medium 108. A further option is that the filtration medium could be pleated, as well as or instead of being stacked.

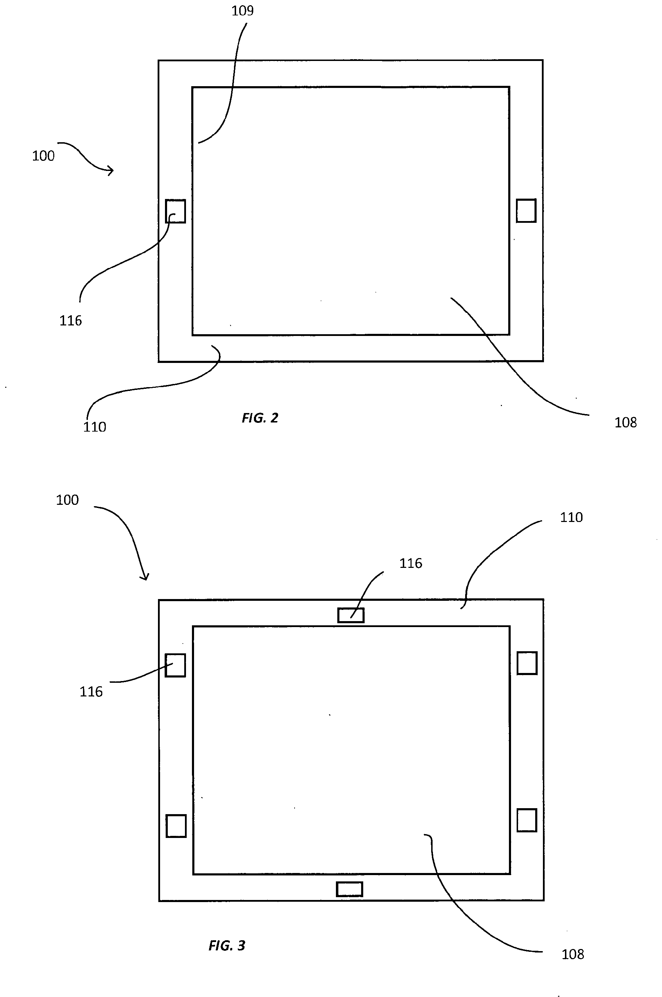

The filtration medium 108 is at least partially supported by a frame 110. The frame 110 supports at least part of a periphery 109 of the filtration medium 108. Figures 2 and 3 illustrate examples of the frame 110 supporting the periphery 109 of the filtration medium 108. The frame 110 may support the filtration medium 108 such that the filtration medium 108 extends wholly across the housing 102 (other than the frame 110 itself).

To support the periphery of the filtration medium 108, the edge portion of the filtration medium is attached to the frame 110 such that the filtration medium 108 is held by the frame 110. For example, the frame 110 may sandwich the periphery 109 of the filtration medium 108 between two frame portions, or a suitable adhesive may be used, or any other technique known to the person skilled in the art of designing filters. In some examples the frame 110 extends around the whole periphery 109 of the filtration medium 108. The frame 110 may be minimised in projection from the housing so as to reduce the liquid-non permeable area taken up in the filter device 100.

The frame 110 may be formed of a liquid impermeable material for example plastic (as may be the housing 102). The frame 110 may be a substantially rigid structure so as to provide increased support to the filtration medium 108. The frame 110 may form a connecting portion between the periphery 109 of the filtration medium 108 and the housing 102. That is to the extent that the filtration medium 108 partitions the housing 102 the frame provides the interface between the housing 102 and the filtration medium 108.

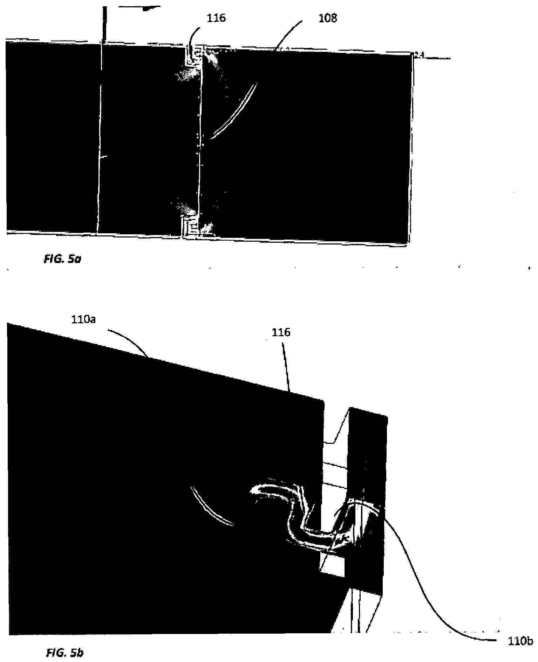

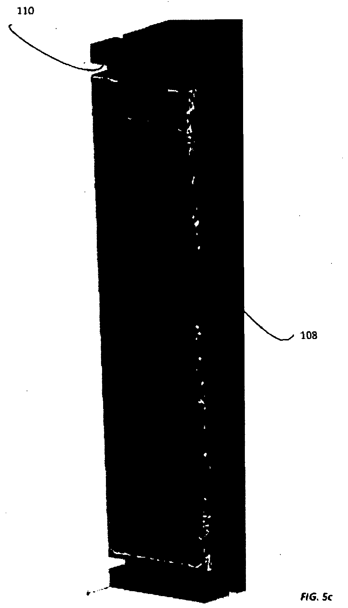

The frame 110 may be a separate component to the housing 102. In some examples the frame 110 and the housing 102 may be integral or otherwise coupled together. For example, the housing 102 may include a protrusion (see figure 5b) which extends to support the periphery 109 of the filtration medium 108 in the same manner as the frame 110. Where the frame 110 is part of the housing 102 it is only separately identified in order to explain how it includes apertures, as discussed below.

The frame 110 includes at least one aperture 116. The aperture 116 extends through the frame 110 such that liquid can pass through the frame 110. In the example of figure 2 the frame 110 includes two apertures 116. It will be understood that the frame 110 can include one or more apertures 116 and the number of apertures may be dependent on the final engine use and/or liquid type for example. Figure 3 for example illustrates a frame with six apertures 116. The apertures 116 may be evenly spaced about the frame 110. Further the apertures may be identical such that the flow through each aperture is constant. Alternatively, the apertures 116 may be sized or shaped differently for example in cases where the inlet 104 is positioned closer to one aperture 116 than another, and/or be irregularly distributed about the frame 110.

The apertures 116 provide an alternative pathway for liquid flowing in the housing 102. In this way a portion of the liquid which is flowing through the housing 102 is able to bypass the filtration medium 108 by passing through one of the apertures 116. This reduces the pressure drop across the filtration medium 108, particularly at lower temperatures. Furthermore, as the liquid cycles through the engine the portion of liquid bypassing the filtration medium 108 has a low likelihood of being the same portion each cycle. In this way the liquid is filtered by a filtration medium 108 with a high filtration efficiency while also reducing the pressure drop across the filtration medium 108.

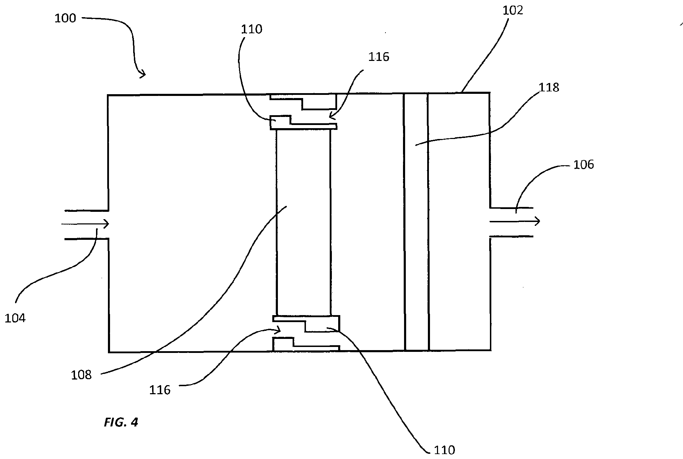

The filter device 100 may include additional filtration medium 118, shown for example in figure 4. Figure 4 shows an example of a filter device 100 which includes a second filtration medium 118 partitioning the housing. The second filtration medium 118 has a lower filtration efficiency than the first filtration medium 108 described with reference to figure 1. In this way, the second filtration medium 118 does not require a bypass because the pressure drop across the second filtration medium 118 is reduced by the reduction in efficiency. Of course, a second filtration medium 118 with the same efficiency as the first filtration medium may also be used with an aperture acting as a second bypass.

In the example shown in figure 4 the second filtration medium is positioned between the first filtration medium 108 and the outlet 106. In this way, the liquid is filtered first by the first filtration medium 108 with a high filtration efficiency, then the liquid is filtered by the second filtration medium 118 with the lower efficiency. However, the second filtration medium 118 does not have a frame 110 with an aperture 116, and thus has no bypass for the liquid. In this way, the liquid which bypasses the first filtration medium 108 is filtered by the second filtration medium 118. Alternatively, or in addition the filter device 100 may have a second filtration medium 118 between the inlet 104 and the first filtration medium 108 such that all the liquid is filtered through a filtration medium 118 of lower filtration efficiency before being filtered by the higher filtration efficiency filtration medium 108 which includes the bypass.

In some (not shown) examples the apertures 116 may have a second filtration medium 118 across or within them. The second filtration medium 118 may have a lower filtration efficiency than the first filtration medium 108. In this way, the liquid bypassing the first filtration medium 108 is filtered by the second filtration medium 118 in the aperture 116.

Figure 4 also illustrates an example aperture 116 with a sinuous path. For example, the aperture 116 may have a z-shaped cross section. In other words, the pathway through the frame 110 may not be direct. This causes the liquid to change direction when flowing through the aperture 116. The change in direction in some examples causes contaminating particles to continue into the first filtration medium rather than bypass the first filtration medium. In examples of a filter device 100 with apertures 116 having sinuous pathways, the pathways may be identical for each aperture 116 or may alter in size and shape.

Figure 5a to 5c illustrate a filter device 500 in which the frame 110 and housing 102 are integral. The frame 110 of figure 5b includes a first portion 110a and a second portion 110b which are coupled together. This coupling provides a pathway therebetween which is the aperture 116.

Figures 5a to 5c also illustrate the flow velocity of the liquid. The darker areas (red and orange) illustrating areas of lower speed and the lighter areas (blues and greens) are relatively high velocity areas. As can be seen, the liquid flows through the aperture 116 at a higher speed compared with the liquid passing though the filtration medium 108.

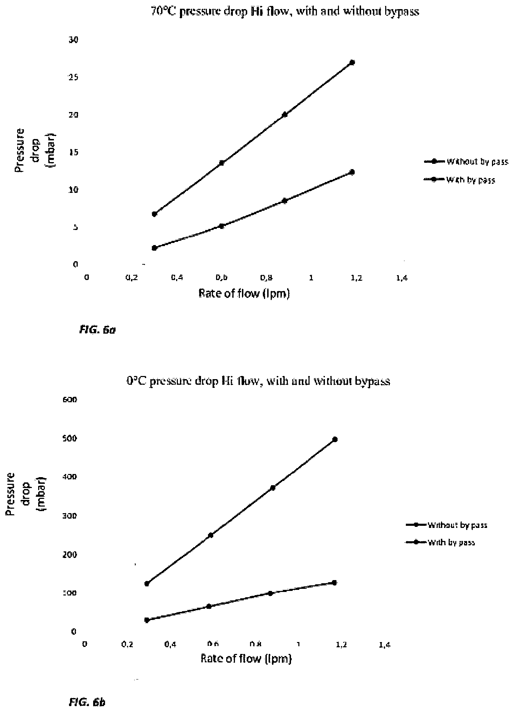

To further illustrate the advantageous effects of the filter device figure 6a illustrates the pressure drop across a filtration medium with and without an aperture acting as a bypass for the filtration medium at varying flow rates when the oil temperature is 70°C. As shown in the graph, the pressure drop across the filtration medium is higher when a bypass is not present. Figure 6b illustrates the same configuration as figure 6a but at a lower temperature of 0°C. The pressure drop with increasing flow rate is higher at the lower temperature. In addition the difference in pressure drop with and without a bypass is larger at lower temperatures.

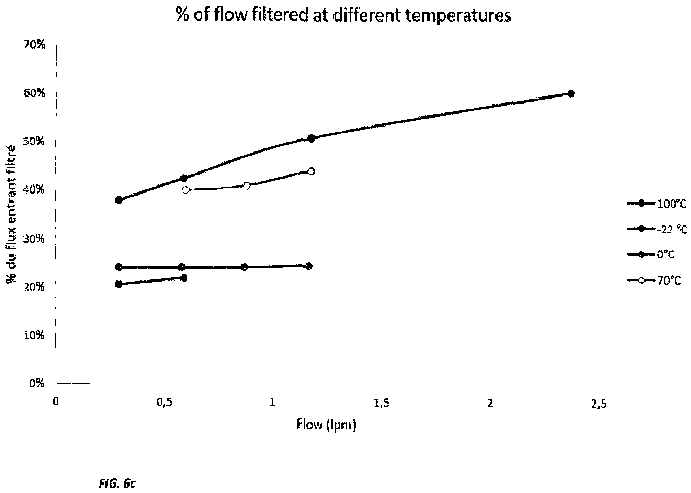

Figure 6c illustrates the percentage of the oil which is filtered by a filter device at different flow rates. The filter device has a frame including an aperture according to the present invention. Each line indicates a different oil temperature. As can be seen, as the temperature increases the amount of liquid filtered increases. Thus, the presence of a bypass reduces in effect as the temperature increases toward normal working temperature. In this sense, the bypass has the required effect at the lower temperatures (the cold starting temperature) of reducing the pressure drop across the filtration medium, without reducing the overall filtration during normal use (at higher temperatures).

Although illustrated throughout the application as a square housing portioned by a sheet of filtration medium, other iterations of the filter device may include housings of alternate shapes, for example a circular housing.

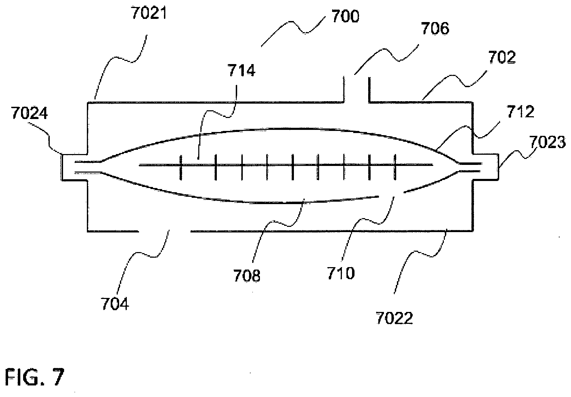

Figure 7 illustrates a plan view of another example of a filter device 700 according to the invention. The filter device 700 includes a housing 702 for containing a liquid. The liquid may be engine oil for example. The housing 702 may have an inlet 704 and an outlet 706. In some cases, the housing 702 may have multiple inlets 704 and/or outlets 706. The inlet 704 allows liquid entry into the housing 702 and the outlet allows liquid to exit the housing 706, this may be valve controlled or passive, for example. In some examples the liquid may be driven into and out of the housing 702 by a pump apparatus (not shown).

The housing 702 is partitioned by a first filtration medium 708. Such first filtration medium 708 comprises an aperture 710 extending therethrough, such that a portion of the liquid can pass through the aperture 710 and bypass the first filtration medium 708. The other portion of the liquid is directed through the first filtration medium 708 for filtering.

According to an aspect of the invention, the aperture 710 is obtained thanks to ultrasonic wave cutting. Of course, alternatively, the aperture 710 can also be obtained or cut thanks to cold stamping. Of course, the first filtration medium can comprise several apertures.

For instance, the first filtration medium is a felt. It may also be a screen or any other type of filtration medium.

The housing 702 further comprises a second filtration medium 712 which divides the housing 702 such that liquid is directed therethrough for filtering. For instance, the second filtration medium is a screen. It may also be a felt or any other type of filtration medium. The second filtration medium may also comprise at least one aperture, for example at least one bypass aperture.

The filter device may further comprise a spacer (for instance a plastic insert) positioned between the first filtration medium and the second filtration medium.

According to an aspect of the invention, the housing 702 is made of two separate shells or portions 7021, 7022 which are joined or connected together at their peripheries 7023, 7024 for instance thanks to a welding step or thanks to any other fastening mean (glue, screws, clip, ...). As an example, the two shells 7021, 7022 and at least one of the first filtration medium 708 and the second filtration medium 712 may be joined altogether at their peripheries.

According to another example not illustrated on Fig. 7, the filter device does not comprise the second filtration medium 712 and the spacer 714. For example, in that case, the first filtration medium 708 may partition the housing 702 such that the filtration medium is between the inlet 704 and the outlet 706. In this way a liquid enters the housing 702 via the inlet 104 and must pass through the filtration medium 708 or its aperture 710 to exit the housing via the outlet 706.

According to an aspect of the invention, the second filtration medium 712 is configured to remove particulates from the liquid when the liquid passes therethrough.

Examples of suitable filtration media include but are not limited to a glass fibre or plastic fibre impregnated with resin or any other fibre, plastic or metallic net. Suitably, this may be provided as a woven or non-woven fabric. Each of the first filtration medium 708 and the second filtration medium may be a single sheet of material or a plurality of stacked sheets for example. Moreover, in some examples the filtration medium 708, 712 may be gathered or bunched etc to create a stacked arrangement of the filtration medium 708, 712. A further option is that the filtration medium could be pleated, as well as or instead of being stacked.

According to an aspect of the invention, the first filtration medium and the second filtration medium are joined at their peripheries and wherein the spacer maintains a space between the first filtration medium and the second filtration medium. The joined or connected filtration medium may therefore form a bag.

According to an aspect of the invention, the first and second filtration mediums are joined or connected at their periphery by welding (eg by ultrasonic welding).

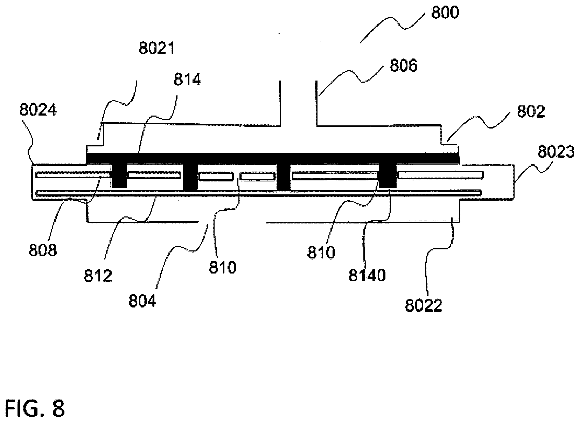

Figure 8 illustrates a plan view of another example of a filter device 800 according to the invention. The filter device 800 includes a housing 802 for containing a liquid. The liquid may be engine oil for example. The housing 802 may have an inlet 804 and an outlet 806. In some cases, the housing 802 may have multiple inlets 804 and/or outlets 806. The inlet 804 allows liquid entry into the housing 802 and the outlet allows liquid to exit the housing 806, this may be valve controlled or passive, for example. In some examples the liquid may be driven into and out of the housing 802 by a pump apparatus (not shown).

The housing 802 is partitioned by a first filtration medium 808. Such first filtration medium 808 comprises apertures 810 extending therethrough, such that a portion of the liquid can pass through the apertures 810 and bypass the first filtration medium 808. The other portion of the liquid is directed through the first filtration medium 808 for filtering.

According to an aspect of the invention, the apertures 810 are obtained thanks to ultrasonic wave cutting. Of course, alternatively, the aperture 810 can also be obtained or cut thanks to cold stamping. Of course, the first filtration medium can comprise one or several apertures.

For instance, the first filtration medium is a felt. It may also be a screen or any other type of filtration medium. Preferentially, the first filtration medium is a high efficiency filtration medium. Preferentially, high efficiency in the context of the present invention is to be understood as meaning an efficiency above 80% for particle size of 30µm.

Preferentially, the apertures 810 are bypass holes.

The housing 802 further comprises a second filtration medium 812 which divides the housing 802 such that liquid is directed therethrough for filtering. For instance, the second filtration medium is a screen. It may also be a felt or any other type of filtration medium. The second filtration medium may also comprise at least one aperture, for example at least one bypass aperture. Preferentially, the second filtration medium 812 is a low efficiency filtration medium. Preferentially, low efficiency in the context of the present invention is to be understood as meaning an efficiency below 80% for particle size of 30µm.

Preferentially, the second filtration medium 812 is implemented to protect the first filtration medium 808. Preferentially, the second filtration medium can be used to prevent or slow down the clogging of the first filtration medium 808.

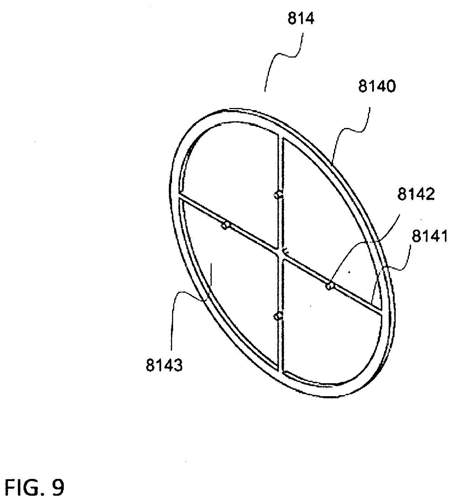

Preferentially, the housing 802 further comprises a third filtration medium 814 which is illustrated by Fig. 9.

For instance, the third filtration medium 814 comprises a frame 8140 to which is/are attached at least one filtration medium 8143. In the example of figure 9, four filtration medium 8143 which are for instance four plastic screens (of course it can also be metallic screens) are attached to the frame 8140. The frame 8140 for instance comprises four legs 8141. Preferentially, the frame comprises one or several lugs 8142. Preferentially, said one or several lug(s) is(are) at least partially obturating said at least one aperture(s).

Preferentially, the frame 8140 is made of plastic and is overmolded. For instance, the frame is made of PA6 or PA66 plastic. Preferentially, the frame 8140 has a role of spacer or is a spacer within the housing.

Preferentially, at least one of the lugs 8142 is penetrating an (or several) aperture(s) 810 (hereafter "corresponding aperture(s)") of the first filtration medium. Preferentially, said at least one of the lugs 8142 is partially or totally obturating the corresponding aperture(s) 810. Preferentially, the frame is provided with a quantity of lugs 8142 such that each of the apertures 810 is partially or totally obturated by a lug 8142 except one or several aperture(s) 810 which is(are) not obturated by a lug.

According to an aspect of the invention, the housing 802 is made of two separate shells or portions 8021, 8022 which are joined or connected together at their peripheries 8023, 8024 for instance thanks to a welding step or thanks to any other fastening mean (glue, screws, clip, ...). Preferentially, the third filtration medium 814 is welded to the top shell or portion 8021 thanks to a laser before the two shells or portions are joined or connected together.

As an example, the two shells 8021, 8022 and at least one of the first filtration medium 808 and the second filtration medium 812 may be joined altogether at their peripheries.

According to another example not illustrated on Fig. 8, the filter device does not comprise the second filtration medium 812.

According to an aspect of the invention, the second filtration medium 812 is configured to remove particulates from the liquid when the liquid passes therethrough.

Examples of suitable filtration media include but are not limited to a glass fibre or plastic fibre impregnated with resin or any other fibre, plastic or metallic net. Suitably, this may be provided as a woven or non-woven fabric. Each of the first filtration medium 808 and the second filtration medium 812 may be a single sheet of material or a plurality of stacked sheets for example. Moreover, in some examples the filtration medium 808, 812 may be gathered or bunched etc to create a stacked arrangement of the filtration medium 808, 812. A further option is that the filtration medium could be pleated, as well as or instead of being stacked.

According to an aspect of the invention, the first filtration medium and the second filtration medium are joined at their peripheries and wherein the third filtration medium or spacer maintains a space between the first filtration medium and the second filtration medium. The joined or connected filtration medium may therefore form a bag.

According to an aspect of the invention, the first and second filtration mediums are joined or connected at their periphery by welding (eg by ultrasonic welding). Alternatively, the bottom shell 8022 and the frame 8140 are pinching or fixing the first filtration medium 808 and the second filtration medium 812. The frame 8140 can be welded to the upper shell 8021.

## Claims

1. A filter device (100; 700; 800) comprising:
a housing (102; 702; 802);
a first filtration medium (108; 708; 808) within the housing such that for a liquid passing through the housing at least a portion is filtered by the first filtration medium; and
a bypass (116; 710; 810) for allowing a portion of the liquid to bypass the first filtration medium;
wherein the first filtration medium (708; 808) comprises at least one aperture (710; 810) extending therethrough, such that a portion of the liquid can pass through the at least one aperture and bypass the first filtration medium;
wherein the filter device further comprises a second filtration medium (712; 812) which is a low efficiency filtration medium;
**characterized in that**
the filter further comprises a third filtration medium (814) within the housing comprising a frame (8140) and at least one filtration medium attached to the frame;
wherein the frame further comprises at least one lug (8142), said at least one lug at least partially obturating said at least one aperture.

2. The filter device of claim 1, further comprising:
a frame (110) supporting at least a portion of a periphery of the first filtration medium;
wherein the frame comprises at least one aperture (116) extending therethrough, such that a portion of the liquid can pass through the at least one aperture and bypass the first filtration medium.

3. The filter device of claim 1 or 2, further comprising a second filtration medium (118) within the housing, such that at least the portion of the liquid which bypasses the first filtration medium passes through the second filtration medium

4. The filter device of claim 3, wherein the first filtration medium has a first filtration efficiency and the second filtration medium has a second filtration efficiency, lower than the first filtration efficiency.

5. The filter device of claim 3 or claim 4, wherein the housing comprises a liquid inlet (104) on a first side of the first filtration medium and a liquid outlet (106) on a second side of the first filtration medium and wherein the second filtration medium is positioned between the inlet or outlet and the first filtration medium.

6. The filter device of claim 2 in combination with claim 3 or claim 4, wherein the second filtration medium is positioned across or within the at least one aperture.

7. The filter device of claim 2 in combination with any one of claims 3 to 6, wherein the frame comprises at least a first frame portion and a second frame portion coupled together, and wherein the aperture is a pathway between the first frame portion and the second frame portion.

8. The filter device of claim 2 in combination with any one of claims 3 to 7, wherein the aperture comprises a sinuous pathway.

9. The filter device of claim 1, wherein the at least one aperture is obtained thanks to ultrasonic wave cutting or by cold stamping.

10. The filter device of claim 1 or claim 9, wherein the filter device further comprises:
a second filtration medium (712; 812) within the housing (792; 802); and
at least a spacer (714) between the first filtration medium and the second filtration medium.

11. The filter device of claim 10, wherein the first filtration medium and the second filtration medium are joined at their peripheries and wherein the spacer maintains a space between the first filtration medium and the second filtration medium.

## Patentansprüche

1. Filtervorrichtung (100; 700; 800), aufweisend:
ein Gehäuse (102; 702; 802);
ein erstes Filtrationsmedium (108; 708; 808) innerhalb des Gehäuses, das derart angeordnet ist, dass für eine Flüssigkeit, die durch das Gehäuse durchtritt, zumindest ein Teil durch das erste Filtrationsmedium gefiltert wird; und
einen Bypass (116; 710; 810), der es einem Teil der Flüssigkeit ermöglicht, das erste Filtrationsmedium zu umgehen;
wobei das erste Filtrationsmedium (708; 808) zumindest eine Öffnung (710; 810) aufweist, die sich durch dieses erstreckt, sodass ein Teil der Flüssigkeit durch die zumindest eine Öffnung hindurchtreten und das erste Filtrationsmedium umgehen kann;
wobei die Filtervorrichtung ferner ein zweites Filtrationsmedium (712; 812) aufweist, das ein Filtrationsmedium mit niedriger Effizienz ist;
wobei das Filter ferner ein drittes Filtrationsmedium (814) innerhalb des Gehäuses aufweist, das einen Rahmen (8140) und zumindest ein Filtrationsmedium, das an dem Rahmen befestigt ist, aufweist;
wobei der Rahmen ferner zumindest einen Ansatz (8142) aufweist, wobei der zumindest eine Ansatz die zumindest eine Öffnung zumindest teilweise verschließt.

2. Filtervorrichtung nach Anspruch 1, ferner aufweisend:
einen Rahmen (110), der zumindest einen Teil eines Umfangs des ersten Filtrationsmediums stützt;
wobei der Rahmen zumindest eine Öffnung (116) aufweist, die sich durch diesen erstreckt, sodass ein Teil der Flüssigkeit durch die zumindest eine Öffnung hindurchtreten und das erste Filtrationsmedium umgehen kann.

3. Filtervorrichtung nach Anspruch 1 oder 2, ferner ein zweites Filtrationsmedium (118) innerhalb des Gehäuses aufweisend, das derart angeordnet ist, dass zumindest der Teil der Flüssigkeit, der das erste Filtrationsmedium umgeht, durch das zweite Filtrationsmedium hindurchtritt

4. Filtervorrichtung nach Anspruch 3, wobei das erste Filtrationsmedium eine erste Filtrationseffizienz aufweist und das zweite Filtrationsmedium eine zweite Filtrationseffizienz aufweist, die niedriger als die erste Filtrationseffizienz ist.

5. Filtervorrichtung nach Anspruch 3 oder Anspruch 4, wobei das Gehäuse einen Flüssigkeitseinlass (104) auf einer ersten Seite des ersten Filtrationsmediums und einen Flüssigkeitsauslass (106) auf einer zweiten Seite des ersten Filtrationsmediums aufweist, und wobei das zweite Filtrationsmedium zwischen dem Einlass oder Auslass und dem ersten Filtrationsmedium positioniert ist.

6. Filtervorrichtung nach Anspruch 2 in Verbindung mit Anspruch 3 oder Anspruch 4, wobei das zweite Filtrationsmedium über oder innerhalb der zumindest einen Öffnung positioniert ist.

7. Filtervorrichtung nach Anspruch 2 in Verbindung mit einem der Ansprüche 3 bis 6, wobei der Rahmen zumindest einen ersten Rahmenabschnitt und einen zweiten Rahmenabschnitt, die miteinander gekoppelt sind, aufweist, und wobei die Öffnung eine Bahn zwischen dem ersten Rahmenabschnitt und dem zweiten Rahmenabschnitt ist.

8. Filtervorrichtung nach Anspruch 2 in Verbindung mit einem der Ansprüche 3 bis 7, wobei die Öffnung eine gewundene Bahn aufweist.

9. Filtervorrichtung nach Anspruch 1, wobei die zumindest eine Öffnung durch Ultraschallschneiden oder durch Kaltprägen erhalten wird.

10. Filtervorrichtung nach Anspruch 1 oder Anspruch 9, wobei die Filtervorrichtung ferner aufweist:
ein zweites Filtrationsmedium (712; 812) innerhalb des Gehäuses (792; 802); und
zumindest einen Abstandshalter (714) zwischen dem ersten Filtrationsmedium und dem zweiten Filtrationsmedium.

11. Filtervorrichtung nach Anspruch 10, wobei das erste Filtrationsmedium und das zweite Filtrationsmedium an ihren Umfängen miteinander verbunden sind und wobei der Abstandshalter einen Zwischenraum zwischen dem ersten Filtrationsmedium und dem zweiten Filtrationsmedium aufrechterhält.

## Revendications

1. Dispositif de filtre (100 ; 700 ; 800) comprenant :
un boîtier (102 ; 702 ; 802) ;
un premier matériau filtrant (108 ; 708 ; 808) au sein du boîtier de sorte que pour un liquide passant à travers le boîtier au moins une portion est filtrée par le premier matériau filtrant ; et
une dérivation (116 ; 710 ; 810) pour permettre à une portion du liquide de contourner le premier matériau filtrant ;
dans lequel le premier matériau filtrant (708 ; 808) comprend au moins une ouverture (710 ; 810) s'étendant à travers celui-ci, de sorte qu'une portion du liquide peut passer à travers l'au moins une ouverture et contourner le premier matériau filtrant ;
dans lequel le dispositif de filtre comprend en outre un deuxième matériau filtrant (712 ; 812) qui est un matériau filtrant à faible efficacité ;
dans lequel le filtre comprend en outre un troisième matériau filtrant (814) au sein du boîtier comprenant un cadre (8140) et au moins un matériau filtrant fixé au cadre ;
dans lequel le cadre comprend en outre au moins un tenon (8142), ledit au moins un tenon obturant au moins partiellement ladite au moins une ouverture.

2. Dispositif de filtre selon la revendication 1, comprenant en outre :
un cadre (110) supportant au moins une portion d'une périphérie du premier matériau filtrant ;
dans lequel le cadre comprend au moins une ouverture (116) s'étendant à travers celui-ci, de sorte qu'une portion du liquide peut passer à travers l'au moins une ouverture et contourner le premier matériau filtrant.

3. Dispositif de filtre selon la revendication 1 ou 2, comprenant en outre un deuxième matériau filtrant (118) au sein du boîtier, de sorte qu'au moins la portion du liquide qui contourne le premier matériau filtrant passe à travers le deuxième matériau filtrant

4. Dispositif de filtre selon la revendication 3, dans lequel le premier matériau filtrant a une première efficacité de filtration et le deuxième matériau filtrant a une deuxième efficacité de filtration, inférieure à la première efficacité de filtration.

5. Dispositif de filtre selon la revendication 3 ou la revendication 4, dans lequel le boîtier comprend une entrée de liquide (104) sur un premier côté du premier matériau filtrant et une sortie de liquide (106) sur un deuxième côté du premier matériau filtrant et dans lequel le deuxième matériau filtrant est positionné entre l'entrée ou la sortie et le premier matériau filtrant.

6. Dispositif de filtre selon la revendication 2 en combinaison avec la revendication 3 ou la revendication 4, dans lequel le deuxième matériau filtrant est positionné en travers ou au sein de l'au moins une ouverture.

7. Dispositif de filtre selon la revendication 2 en combinaison avec l'une quelconque des revendications 3 à 6, dans lequel le cadre comprend au moins une première portion de cadre et une deuxième portion de cadre accouplées ensemble, et dans lequel l'ouverture est un passage entre la première portion de cadre et la deuxième portion de cadre.

8. Dispositif de filtre selon la revendication 2 en combinaison avec l'une quelconque des revendications 3 à 7, dans lequel l'ouverture comprend un passage sinueux.

9. Dispositif de filtre selon la revendication 1, dans lequel l'au moins une ouverture est obtenue par découpage par ondes ultrasonores ou par estampage à froid.

10. Dispositif de filtre selon la revendication 1 ou la revendication 9, dans lequel le dispositif de filtre comprend en outre :
un deuxième matériau filtrant (712 ; 812) au sein du boîtier (792 ; 802) ; et
au moins un espaceur (714) entre le premier matériau filtrant et le deuxième matériau filtrant.

11. Dispositif de filtration selon la revendication 10, dans lequel le premier matériau filtrant et le deuxième matériau filtrant sont réunis au niveau de leurs périphéries et dans lequel l'espaceur maintient un espace entre le premier matériau filtrant et le deuxième matériau filtrant.
